# EUROPÄISCHE PATENTSCHRIFT

(11) **EP 1 457 728 B1**
(45) Veröffentlichungstag und Bekanntmachung des Hinweises auf die Patenterteilung: **10.03.2010**
(21) Anmeldenummer: 03027221.5
(22) Anmeldetag: 28.11.2003
(51) Int. Cl.: F16L 55/179

(54) **Einrichtung zum Sanieren von Hausanschlussleitungen von einer Grundleitung aus**
Device for renovating a domestic connection conduit from a main conduit
Dispositif de rénovation d'une conduite de raccordement domestique depuis une conduite principale

(30) Priorität: 14.03.2003 DE 10311828
(43) Veröffentlichungstag der Anmeldung: 15.09.2004
(73) Patentinhaber: Haas, Helmar, 71686 Remseck (DE)
(72) Erfinder: Haas, Helmar, 71686 Remseck (DE)
(74) Vertreter: Dreiss

(56) Entgegenhaltungen:
- EP-A- 0 337 031
- WO-A-94/13998
- US-A- 5 950 682
- US-A- 6 001 212
- US-B1- 6 484 757

## Beschreibung

Die vorliegende Erfindung bezieht sich auf eine Einrichtung zum Sanieren von Hausanschlussleitungen von einer Grundleitung aus

Das Sanieren von Hausanschlussleitungen wird derzeit von einem Hausrevisionsschacht aus vorgenommen. Ein Problem bei dieser Vorgehensweise besteht jedoch darin, dass Privatgrundstücke betreten werden müssen, obwohl in vielen Fällen die Hausanschlussleitung bis zum Gebäude hin in die Sanierungskompetenz der Gemeinde fällt.

Dabei wird unter Sanierung nicht nur das Auskleiden von Hausanschlussleitungen längs defekter Bereiche verstanden sondern auch Vorarbeiten, wie Sichtkontrolle mittels Kamera, Ausfräsen, Reinigen und dergleichen sowie Nacharbeiten, wie Freischneiden von Abzweigungen, Kamera-Sichtkontrolle und dergleichen sind unter diesen Begriff zu subsummieren.

Aus der EP 0 672 229 B1 ist es bekannt, von der Grundleitung aus in den Mündungsbereich einer Hausanschlussleitung einen Inliner zu legen, und zwar mit einer durch die Grundleitung zum Abzweig zu verfahrenden Vorrichtung, die mit einer gesondert herzustellenden Dichtmanschette bestückt wird, die zum Abdichten des Zugangs zur Hausanschlussleitung um diesen gelegt und mittels an der Vorrichtung beweglich angebrachter Klammern angedrückt und festgelegt wird. Die Vorrichtung besitzt einen zweiteiligen recht- oder stumpfwinklig zusammengeflanschten Umlenkkanal, dessen Eingangsende mit einer Leitblechverengung versehen ist. Nachteilig hieran ist jedoch einerseits die aufwendige Konstruktion einschließlich Klammerantrieb und andererseits dass nur ein Inlinerbelegen der Hausanschlussleitung im wesentlichen nahe deren Mündungsbereich von der Grundleitung aus vorgenommen werden kann. Eine komplette Sanierung ist mit dieser bekannten Einrichtung nicht möglich.

der US-A-6 001 212 ist eine Einrichtung zum Sanieren von Hausanschlussleitungen von einer Grundleitung aus bekannt, die ausschließlich dem Belegen der Hausanschlussleitung mit einem mittels Druckluft umstülpbaren Inliner dient.

Diese Einrichtung entspricht dem Oberbegriff des Anspruchs 1.

Aufgabe der vorliegenden Erfindung ist es deshalb, eine Einrichtung zum kompletten Sanieren von Hausanschlussleitungen der eingangs genannten Art zu schaffen, mit der von der Grundleitung aus im wesentlichen sämtliche Vor-, Haupt- und Nachsanierungsarbeiten und zwar über im wesentlichen die gesamte Länge der Hausanschlussleitung vorgenommen werden können.

Zur Lösung dieser Aufgabe sind bei einer Einrichtung zum Sanieren von Hausanschlussleitungen von einer Grundleitung aus der genannten Art die im Anspruch 1 angegebenen Merkmale vorgesehen.

Durch die erfindungsgemäßen Maßnahmen ist erreicht, dass die verfahrbare Vorrichtung eine Umlenkführung von der Grundleitung in die Hausanschlussleitung schafft, in welcher sowohl Kameras, Werkzeuge z.B. zum Reinigen bzw. Ausfräsen der Hausanschlussleitung, Sanierungswerkzeuge bzw. - materialien als auch Nachbearbeitungswerkzeuge, beispielsweise in Form von Schneidwerkzeugen, die zum Öffnen von weiteren Seitenanschlüssen und Durchgängen dienen, in die Hausanschlussleitung geführt werden können. Außerdem ist das Abdichten im Spalt zwischen Umlenkkanal und Hausanschlussleitung in einfacherer Weise zu erreichen.

Eine günstige Anordnung des Packers und damit ein entsprechend gutes Positionieren der Vorrichtung ergibt sich durch die Merkmale nach Anspruch 2. Eine zweifache Anwendung des Packers ergibt sich dann, wenn die Merkmale nach Anspruch 3 vorgesehen sind.

Eine vorteilhafte Ausführung des Umlenkkanals ergibt sich aus den Merkmalen des Anspruchs 4, so dass auch Werkzeuge und dergleichen problemlos aus der Grundleitung in die Hausanschlussleitung und zurück verbracht werden können.

Gemäß einem bevorzugten Ausführungsbeispiel sind jedoch die Merkmale nach Anspruch 5 vorgesehen, wonach der Durchgangsverbindungskanal innerhalb eines Gehäuses angeordnet ist, das dem Querschnitt der Grundleitung angepasst ist.

Mit dem Merkmal nach Anspruch 6 ist erreicht, dass die Vorrichtung auch bei leichteren Verengungen der Grundleitung durch diese verfahrbar ist.

Mit dem Merkmal nach Anspruch 7 ist erreicht, dass auch beim Sanierungsbetrieb die Grundleitung von der normalen Abwassermenge durchflossen werden kann.

In weiterer Ausgestaltung sind die Merkmale nach Anspruch 5 vorgesehen, womit ein nahezu stoßfreier Übergang von dem Durchgangsverbindungskanal zur Hausanschlussleitung erreicht ist.

In weiterer vorteilhafter Ausgestaltung sind die Merkmale nach einem oder mehreren der Ansprüche 9 bis 11 vorgesehen, womit gewährleistet ist, dass eine beliebige Länge der Hausanschlussleitung von der Grundleitung aus mit einem beispielsweise mittels Druckluft verbrachten Inliner versehen werden kann.

Weitere Einzelheiten der Erfindung sind der folgenden Beschreibung zu entnehmen, in der die Erfindung anhand des in der Zeichnung dargestellten Ausführungsbeispieles näher beschrieben und erläutert ist. Es zeigen:
- Figur 1: in schematischer teilweise geschnittener Seitenansicht eine Einrichtung zum Sanieren von Hausanschlussleitungen von einer Grundleitung aus, gemäß einem bevorzugten Ausführungsbeispiel vorliegender Erfindung und
- Figur 2: eine der Figur 1 ähnliche Darstellung des Zugangsbereichs zwischen Hausanschlussleitung und Grundleitung bei einer weiteren Anwendung der Einrichtung nach Figur 1.

Die in der Zeichnung dargestellte Einrichtung 10 dient zum vollständigen Sanieren von Hausanschlussleitungen 11 von einer Grundleitung 12 aus, d.h., dass die Einrichtung 10 von einem beispielsweise Straßenschacht aus durch die Grundleitung 12 in eine der zu sanierenden Hausanschlussleitungen 11 geführt werden kann. Dabei ist die Einrichtung 10 derart ausgebildet, dass sie über die Grundleitung 12 einen Zugang zu einer zu sanierenden Hausanschlussleitung 11 für alle Arten von Werkzeugen und Materialien schafft, so dass in der Hausanschlussleitung 11 sowohl Vorarbeiten als auch Hauptarbeiten als auch Nacharbeiten für die Sanierung durchgeführt werden können. Die Vorarbeiten liegen beispielsweise darin, dass die Hausanschlussleitung 11 mit Hilfe eines an einem verfahrbaren Werkzeugträger angeordneten Werkzeugs ausgefräst oder in sonstiger Weise gereinigt werden kann. Weitere Vorarbeiten sind beispielsweise das Erkennen von schadhaften Stellen mit einer Kamera. Hauptarbeiten resultieren dann in einer Belegung bzw. Auskleidung einzelner Bereiche oder der gesamten Länge der Hausanschlussleitung mittels Inlinerschläuchen oder dergleichen. Nacharbeiten sind dann beispielsweise darin zu sehen, dass die mit dem Inliner bedeckten Abzweigungen bzw. das Ende der Hausanschlussleitung wieder freigeschnitten werden müssen. Schließlich sind Nacharbeiten auch in der Nachuntersuchung mittels einer Kamera zu sehen.

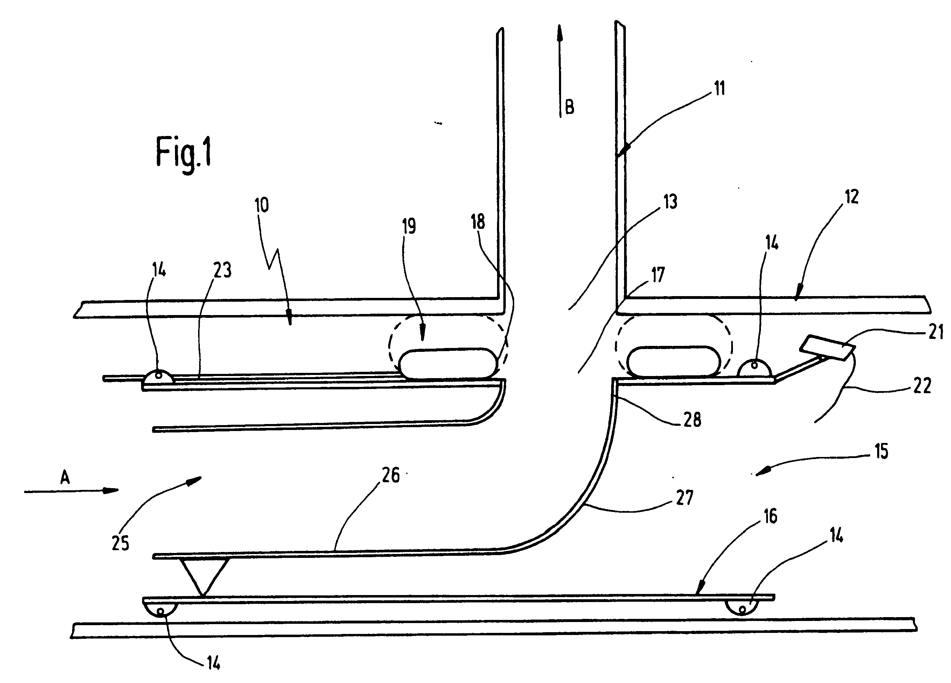

Die Einrichtung 10 besitzt eine von einem nicht dargestellten Schacht aus durch die Grundleitung 12 verfahrbare Vorrichtung 15, wobei die Verfahrbarkeit in beliebiger bekannter Weise erreicht werden kann. Beispielsweise ist es möglich, die Vorrichtung 15 auf Rollen oder Kufen mittels Druckluft, einer Stange, Spirale oder dergleichen durchzuschieben. Es ist aber auch möglich, die Vorrichtung 15 mit einem motorischen Antrieb zu versehen. Beim dargestellten Ausführungsbeispiel besitzt die verfahrbare Vorrichtung 15 ein Gehäuse 16, das an den Enden über den Umfang verteilt mit kufenartigen Ansätzen 14, längsgerichteten Kufen oder dergleichen versehen ist, die sich an der Innenwandung der Grundleitung 12 abstützen. An einem Längsbereich des Gehäuses 16 ist an einer Stelle seines Umfanges eine Öffnung 17 vorgesehen, um die ein mit einer zentrischen Ausnehmung 18 versehener ringartiger Packer 19 aufblasbar angeordnet ist. Das Gehäuse 16 ist vorzugsweise zylindrisch ausgebildet und an seinen beiden Enden offen. Der Außendurchmesser des Gehäuses 16 ist etwa gleich dem 0,8- bis 0,9-fachen des Innendurchmessers der Grundleitung 12. Das Gehäuse 16 ist mit einer TV-Kamera 21 und einem TV-Kabel 22, das von dem Einstiegschacht der Grundleitung 12 zur TV-Kamera 21 führt, bestückt. Außerdem führt vom Einstiegschacht durch das Gehäuse 16 hindurch zum Packer 19 eine Druckluftleitung 23 zu dessen Aufblasen und Entlüften. Bei aufgeblasenem Packer 19 (gestrichelt in Fig. 1) klemmt dieser das Gehäuse 16 der Vorrichtung 15 in der Grundleitung 12 fest und dichtet den Spalt zwischen Gehäuse 16 und Innenwandung der Grundleitung 12 ab.

Bei einem nicht dargestellten Ausführungsbeispiel sind statt des einen auf dem Gehäuse 16 liegenden Packers zwei als Hülsen ausgebildete Packer parallel zueinander um das Gehäuse 16 und die Öffnung 17 freilassend angeordnet.

Innerhalb des Gehäuses 16 ist ein Durchgangsverbindungskanal 25 mit stets gleichbleibenden Innendurchmesser vorgesehen, der stetig gebogen ist und der der umlenkenden Verbindung der Grundleitung 12 mit der Hausanschlussleitung 11 dient.

Der beim Ausführungsbeispiel ebenfalls zylindrische und einstückige Durchgangsverbindungskanal 25 besitzt in Ansicht gesehen die Form eines Knies, wobei der längere Schenkel 26 etwa vom einen Ende des Gehäuses 16 ausgeht und unterhalb der Öffnung 17 im Gehäuse 16 über das Knie 27 in einen kürzeren Schenkel 28 übergeht, der mit der Öffnung 17 fluchtet und dessen Ende mit dem Innenrand der Öffnung 17 fest verbunden ist. In nicht dargestellter Weise ist der Durchgangsverbindungskanal 25 innerhalb des Gehäuses 16 auch an seinem längeren Schenkel 26 festgehalten. Auf diese Weise dient der Durchgangsverbindungskanal 25 zum stetigen Umlenken von Werkzeugen, Materialien und dergleichen aus der von der Grundleitung 12 eingenommenen Richtung A in die von der betreffenden Hausanschlussleitung 11 eingenommenen Richtung B. Auch wenn in Figur 1 die Richtungen A und B senkrecht aufeinander stehen und das Knie 27 rechtwinklig ist, versteht es sich, dass spitzwinklige Anordnungen von A und B möglich sind und das Knie 27 dann einen entsprechenden stumpfen Winkel einschließt.

Die verfahrbare Vorrichtung 15 bildet somit einen sogenannten Technikträger sowohl für ständig angebrachte Bauelemente Geräte, wie TV-Kamera und aufblasbarer Packer als auch für vorrübergehend aufgenommene Geräte, Sanierungsmaterialien und dergleichen und deren umlenkenden Führung von der Grundleitung 12 in die Hausanschlussleitung 11. Zur problemlosen Umlenkungsführung entspricht der Querschnitt der der Hausanschlussleitung 11 zugewandten Öffnung 17 des Durchgangsverbindungskanals 25 in Form und Größe dem Querschnitt der Hausanschlussleitung 11 bzw. des Zugangs.

Beispielsweise wird bei einer Voruntersuchung der betreffenden Hausanschlussleitung 11 mit der verfahrbaren Vorrichtung 15 eine nicht dargestellte Untersuchungskamera, die in den Durchgangsverbindungskanal 25 bzw. dessen längeren Schenkels 26 eingesetzt wird, durch die Grundleitung 12 in den Bereich der Mündung 13 der Hausanschlussleitung 11 gebracht. Ist die verfahrbare Vorrichtung 15 im Bereich der Mündung 13 mittels des Packers 19 festgesetzt und der Übergang vom Umlenkkanal zur Hausanschlussleitung abgedichtet, so wird die Untersuchungskamera durch das Knie 27 und den kürzeren Schenkel 28 und durch die Öffnung 17 bzw. Ausnehmung 18 hindurch in die Hausanschlussleitung 11 gebracht, so dass diese über ihre gesamte Länge hin untersucht werden kann. Wenn dies erfolgt ist, wird die Untersuchungskamera wieder zurück in die verfahrbare Vorrichtung 15 bzw. deren UmlenkKanal 25 verbracht und die gesamte verfahrbare Vorrichtung 15 nach dem Entlüften des Packers 19 aus der Grundleitung 12 wieder herausgezogen. Danach wird die Untersuchungskamera ersetzt durch beispielsweise eine mit einem Fräswerkzeug bestückte Fräsvorrichtung, die dann nach Wiedereinsetzen der verfahrbaren Vorrichtung 15 in die Grundleitung 12 an die Stelle der Mündung 13 in die Hausanschlussleitung 11 eingefahren und zu deren Freifräsen benutzt wird. Nach diesem Fräsvorgang wird das Fräswerkzeug in die Vorrichtung 15 zurückverbracht und zusammen mit dieser aus der Grundleitung 12 herausgezogen.

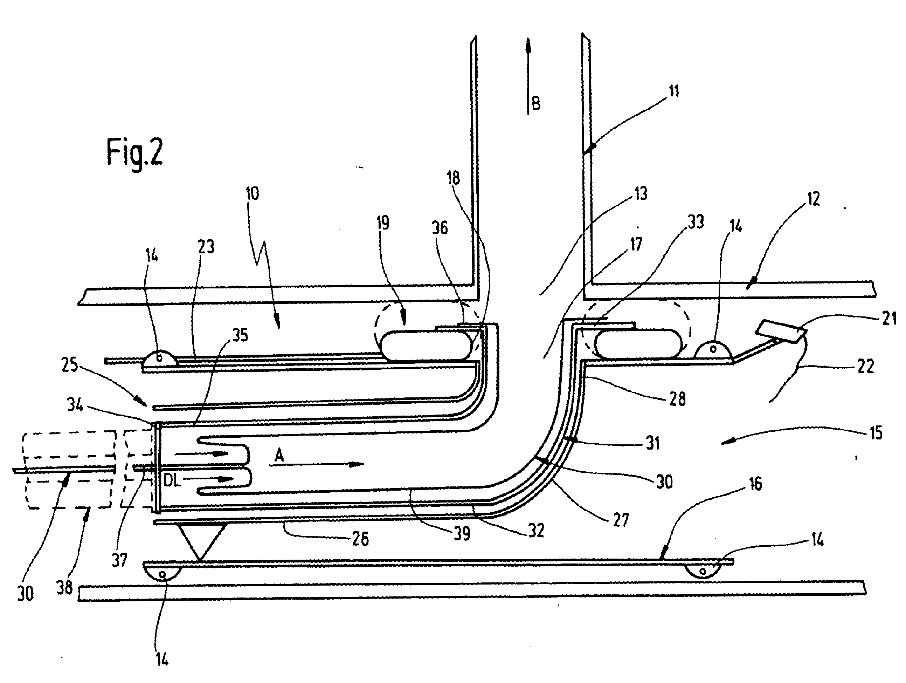

Gemäß Figur 2 wird danach in den Durchgangsverbindungskanal 25 und zwar nach dem Knie 27 am Ende des kürzeren Schenkels 28 und in dessen Öffnungsbereich das eine Ende eines vom anderen Ende her umstülpbaren Schlauches 30 befestigt. Ein solcher Schlauch 30 dient unmittelbar als in die Hausanschlussleitung 11 zu bringender Sanierungsinliner. Das betreffende Ende des Inversionsschlauches 30 kann beispielsweise mittels Kleben unmittelbar um den Rand der Öffnung 17 des Gehäuses 16 befestigt werden. Es ist aber auch nach Figur 2 möglich, hierzu einen Halteeinsatz 31 zu verwenden, der als gebogenes Rohrstück 32 mit einem Kragen 33 ausgebildet ist. Das Rohrstück 32 wird mit seinem dem Kragen 33 abgewandten Ende 35 durch die Öffnung 17 im Gehäuse 16 in den Verbindungskanal 25 über dessen gesamte Länge eingesetzt, wobei der Kragen 33 auf dem Packer 19 liegt und von diesem beim Aufblasen der Packers in Richtung der Mündung 13 zur Hausanschlussleitung 11 gedrückt wird. Das innere zu einem Kragen geformte betreffende Ende 36 des Schlauches 30 wird von außen auf den Kragen 33 gelegt, dass heißt zur Mündung hin gebracht um auf deren Randbereich mit dem Aufblasen des Packers 19 geklebt. Vorzugsweise innerhalb des Umlenkkanals 25 ist der zylindrische Teil 39 des Inlinerschlauches 30 über eine kurze Länge taschenartig nach innen gestülpt und flach gelegt nach außen weitergeführt, so dass ein Ringraum entseht, in dem zum umstülpenden Vorwärtsbewegen des Inlinerschlauches 30 Druckluft gemäß den Pfeilen DL angreifen kann. Der zusammengelegte längere Teil 37 des umzustülpenden Inlinerschlauches 30 ist in einem Druckluftschlauch 38 geführt, der an einem Flansch 34 des Halteeinsatzes 31 befestigt wird und mit dem Inlinerschlauch 30 zum nächsten Einstiegsschacht der Grundleitung 12 geführt ist. Nach erfolgter Sanierung durch Belegen der Hausanschlussleitung 11 mit dem Inlinerschlauch 30 wird die verfahrbare Vorrichtung 15 wieder herausgefahren und der Einsatz 31 entfernt.

Es kann dann zum Nachbearbeiten der sanierten Hausanschlussleitung 11 in die verfahrbare Vorrichtung 15 ein weiteres Werkzeug eingebracht und zur Mündung 13 in die Hausanschlussleitung 11 verfahren werden, beispielsweise ein Werkzeug zum Freischneiden von durch den Inlinerschlauch 30 überdeckten Abzweigöffnungen in der Hausanschlussleitung 11. Außerdem kann in einem weiteren Arbeitsgang die verfahrbare Vorrichtung 15 wieder mit der vorgenannten Untersuchungskamera bestückt werden, um eine Nachuntersuchung bzw. Qualitätskontrolle der sanierten Hausanschlussleitung 11 vorzusehen.

Wenn auch die verfahrbare Vorrichtung 15 mit einem den Durchgangsverbindungskanal 25 vollständig umgebenden Gehäuse 16 beschrieben ist, versteht es sich, dass es auch möglich ist, den Durchgangsverbindungskanal 25 an seinem der Mündung 13 der Hausanschlussleitung 11 zuzuwendenden Ende mit einem großflächigen Flansch zu versehen, auf dem der ringförmige Packer 19 gehalten ist.

## Patentansprüche

1. Einrichtung (10) zum kompletten Sanieren von Hausanschlussleitungen (11) von einer Grundleitung (12) aus, mit einer durch die Grundleitung (12) zu einem winkligen Abzweig (13) der betreffenden Hausanschlussleitung (11) verfahrbaren Vorrichtung (15), die einen Umlenkkanal (25) aufweist und die im Bereich des Abzweigs (13) in der Grundleitung (12) festsetzbar ist, wobei die verfahrbare Vorrichtung (15) zumindest am dem Abzweig (13) zugewandten Ende des Umlenkkanals (25) mit einem Gehäuse (16) versehen ist, das mit einem aufblasbaren Packer (19) bestückt ist, mittels dem der Übergang zwischen Umlenkkanal (25) und Abzweig (13) abdichtbar ist, **dadurch gekennzeichnet, dass** die verfahrbare Vorrichtung (15) als Technikträger mit ständig angebrachten Werkzeugen, Kameras und anderen Geräten ausgebildet ist und der Umlenkkanal (25) eine zum Einbringen dieser Geräte geeignete Durchgangsverbindung von der Grundleitung (12) zur Hausanschlussleitung (11) schafft.

2. Einrichtung nach Anspruch 1, **dadurch gekennzeichnet, dass** der die Vorrichtung (15) bzw. dessen Gehäuse (16) umgebende Packer (19) den Randbereich der der Hausanschlussleitung (11) zugewandten Öffnung (17) des Umlenkkanals (25) umgebend angeordnet ist.

3. Einrichtung nach Anspruch 1 oder 2, **dadurch gekennzeichnet, dass** mit dem aufblasbaren Packer (19) die verfahrbare Vorrichtung (15) festsetzbar ist.

4. Einrichtung nach mindestens einem der vorhergehenden Ansprüche, **dadurch gekennzeichnet, dass** der Umlenkkanal (25) durch ein einstückiges stetig gebogenes Rohr gebildet ist.

5. Einrichtung nach mindestens einem der Ansprüche, **dadurch gekennzeichnet, dass** das Gehäuse (16) der Querschnittsform der Grundleitung (12) angepasst ist, den Umlenkkanal (25) im wesentlichen vollständig aufnimmt und eine mit der Öffnung (17) des Umlenkendes fluchtende Umfangsöffnung (18) aufweist.

6. Einrichtung nach Anspruch 5, **dadurch gekennzeichnet, dass** die Querschnittsabmessung des Gehäuses (16) etwa 80% bis 90% von derjenigen der Grundleitung (12) entspricht.

7. Einrichtung nach Anspruch 5 oder 6, **dadurch gekennzeichnet, dass** das Gehäuse (16) axial durchgängig ist.

8. Einrichtung nach einem der vorhergehenden Ansprüche, **dadurch gekennzeichnet, dass** der Umlenkkanal (25) mit einem einen Kragen (33) aufweisenden Halteeinsatz (31) für das eine Ende eines umstülpbaren Schlauches (30) zum Einlegen in die Hausanschlussleitung (11) bestückbar ist.

9. Einrichtung nach Anspruch 8, **dadurch gekennzeichnet, dass** der Kragen (33) mittels des Packers (19) gegen den Umfangsrandbereich des Abzweigs (13) drückbar ist.

10. Einrichtung nach Anspruch 8 oder 9, **dadurch gekennzeichnet, dass** der Halteeinsatz (31) im wesentlichen die Länge des Umlenkkanals (25) aufweist und an seinem dem Kragen (33) abgewandten Ende mit einem Verbindungsflansch (34) versehen ist.

## Claims

1. An installation (1) for the complete renovation of domestic connection conduits (11) from the direction of a main conduit (12), having a device (15) which is movable through the main conduit (12) to an angled branch (13) of the respective domestic connection conduit (11) and has a deflection conduit (25) and can be fixed in place in the main conduit (12) in the area of the angled branch (13), while the movable device (15) is provided with a housing at least at the end of the deflection conduit (25) facing the angled branch (13), and is equipped with an inflatable packing device (19), by means of which the transition between the deflection conduit (25) and the angled branch (13) can be sealed, **characterized in that** the movable device (15) is embodied as an apparatus support with permanently attached tools, cameras and other appliances, and the deflection conduit (25) creates a passage suitable for introducing these appliances from the main conduit (12) to the domestic connection conduit (11).

2. The installation in accordance with claim 1, **characterized in that** the packing device (19) surrounding the device (15), or respectively its housing (16), is arranged to surround the edge area of the opening (17) facing the domestic connection conduit (11) of the deflection conduit (25).

3. The installation in accordance with claim 1 or 2, **characterized in that** the movable device (15) can be fixed in place by means of the inflatable packing device (19).

4. The installation in accordance with at least one of the preceding claims, **characterized in that** the deflection conduit (25) is constituted by a one-piece, steadily curved tube.

5. The installation in accordance with at least one of the preceding claims, **characterized in that** the housing (16) is matched to the cross-sectional shape of the main conduit (12), essentially completely contains the deflection conduit (25), and has a circumferential opening (18) aligned with the opening (17) of the deflection end.

6. The installation in accordance with claim 5, **characterized in that** the cross-sectional dimension of the housing (16) corresponds by approximately 80% to 90% to that of the main conduit (12).

7. The installation in accordance with claim 5 or 6, **characterized in that** the housing (16) has an axial passage.

8. The installation in accordance with one of the preceding claims, **characterized in that** the deflection conduit (15) is equipped with a holding insert (31), which has a collar (33) for the one end of a hose (30), which can be turned up, for insertion into the domestic connection conduit (11).

9. The installation in accordance with claim 8, **characterized in that** the collar (33) can be pressed against the circumferential area of the angled branch (13) by means of the packing device (19).

10. The installation in accordance with claim 8 or 9, **characterized in that** the holding insert (31) essentially is of the length of the deflection conduit (25) and, on its end facing away from the collar (33), is provided with a connecting flange (34).

## Revendications

1. Dispositif (10) pour l'assainissement complet de conduites de raccordement domestiques (11) à partir d'une conduite principale (12), comportant un dispositif (15), qui peut être déplacé à travers la conduite principale (12) vers un embranchement (13) angulaire de la conduite de raccordement domestique (11) concernée et qui comporte un conduit de renvoi (25) et peut être fixé dans la conduite principale (12) dans la zone de l'embranchement (13), ledit dispositif (15) déplaçable étant muni, au moins au niveau de l'extrémité du conduit de renvoi (25), orientée vers l'embranchement (13), d'un carter (16), qui est muni d'une garniture d'étanchéité (16) gonflable, qui assure l'étanchéité de la transition entre le conduit de renvoi (25) et l'embranchement (13), **caractérisé en ce que** le dispositif (15) déplaçable est réalisé sous la forme d'un support technique sur lequel sont montés en permanence des outils, caméras et autres appareils, et le conduit de renvoi (25) crée une liaison de passage appropriée à l'introduction de ces appareils, qui s'étend depuis la conduite principale (12) vers la conduite de raccordement domestique (11).

2. Dispositif selon la revendication 1, **caractérisé en ce que** la garniture d'étanchéité (19), entourant le dispositif (15) ou le carter (16) de celui-ci, est disposée de manière à entourer la zone de bordure de l'ouverture (17) du conduit de renvoi (25), orientée vers la conduite de raccordement domestique (11).

3. Dispositif selon la revendication 1 ou 2, **caractérisé en ce que** le dispositif (15) déplaçable peut être fixé avec la garniture d'étanchéité (19) gonflable.

4. Dispositif selon au moins l'une des revendications précédentes, **caractérisé en ce que** le conduit de renvoi (25) est formé par un tube d'un seul tenant toujours courbe.

5. Dispositif selon au moins l'une des revendications précédentes, **caractérisé en ce que** le carter (16) est ajusté à la forme de la section de la conduite principale (12), reçoit sensiblement entièrement le conduit de renvoi (25) et comporte une ouverture périphérique (18) alignée avec l'ouverture (17) de l'extrémité du conduit de renvoi.

6. Dispositif selon la revendication 5, **caractérisé en ce que** la dimension de la section du carter (16) correspond à environ 80 % à 90 % de celle de la conduite principale (12).

7. Dispositif selon la revendication 5 ou 6, **caractérisé en ce que** le carter (16) peut être traversé de part en part dans le sens axial.

8. Dispositif selon au moins l'une des revendications précédentes, **caractérisé en ce que** le conduit de renvoi (25) peut être muni d'un insert de fixation (31), muni d'un collet (33) et destiné à maintenir l'une des extrémités d'un tuyau flexible (30) emboutissable par retournement pour l'introduction dans la conduite de raccordement domestique (11).

9. Dispositif selon la revendication 8, **caractérisé en ce que** le collet (33) peut être pressé au moyen de la garniture d'étanchéité (19) contre la zone de bordure périphérique de l'embranchement (13).

10. Dispositif selon la revendication 8 ou 9, **caractérisé en ce que** l'insert de fixation (31) possède sensiblement la longueur du conduit de renvoi (25) et est muni d'une bride d'assemblage (34), au niveau de son extrémité opposée au collet (33).
